# EUROPÄISCHE PATENTSCHRIFT

(11) **EP 1 068 981 B1**
(45) Veröffentlichungstag und Bekanntmachung des Hinweises auf die Patenterteilung: **25.08.2004**
(21) Anmeldenummer: 00112120.1
(22) Anmeldetag: 06.06.2000
(51) Int. Cl.: B60K 31/00

(54) **Verfahren und Vorrichtung in Kraftfahrzeugen zur Ermöglichung eines stabilen Fahrbetriebs bei extrem niedriger Fahrzeuggeschwindigkeit**
Creep control method and device to permit smooth vehicle motion at low speeds
Appareil et procéde pour faciliter la conduite stable à vitesses très réduites d'un véhicule

(30) Priorität: 16.07.1999 DE 19933321
(43) Veröffentlichungstag der Anmeldung: 17.01.2001
(73) Patentinhaber: Bayerische Motoren Werke Aktiengesellschaft, 80809 München (DE)
(72) Erfinder: Rastinger, Bernhard, 81249 München (DE)

(56) Entgegenhaltungen:
- DE-A- 3 421 387
- DE-A- 4 442 025
- DE-A- 19 753 764

## Beschreibung

Die Erfindung bezieht sich auf ein Verfahren und eine Vorrichtung in Kraftfahrzeugen zur Ermöglichung eines stabilen Fahrbetriebs bei extrem niedriger Fahrzeuggeschwindigkeit nach dem Oberbegriff des Patentanspruchs 1, 2 oder 7, 8.

Bekannte Allrad- bzw. geländegängige Fahrzeuge besitzen im Regelfall für den Extremgeländeeinsatz eine zusätzliche Übersetzungsstufe für den sog. low"-Betrieb, um extrem niedrige Geschwindigkeiten bei schwierigem Gelände fahren zu können. Oft kann diese Übersetzungsstufe nur im Stand ein- und ausgeschaltet werden. Die Ermöglichung einer derartigen Zusatz-Übersetzungsstufe erfordert hohen technischen Aufwand, Bauraum und Gewichtserhöhung.

Zum technischen Hintergrund wird auf die DE 197 53 764 A1 und die DE 44 42 025 A1 hingewiesen. Aus der DE 197 53 764 A1 ist ein Verfahren Vorrichtung zur Ermöglichung eines stabilen Fahrbetriebs bei extrem niedrigen Fahrzeuggeschwindigkeiten durch eine spezielle Geschwindigkeitsregelung bekannt. Die DE 44 42 025 A1 beschäftigt sich mit einem Verfahren zur Verbesserung des Anfahrverhaltens bei Kraftfahrzeugen.

Es ist Aufgabe der Erfindung, ein Verfahren bzw. eine Vorrichtung eingangs genannter Art derart zu verbessern, daß Kosten und Gewicht eingespart werden und die Handhabbarkeit vereinfacht wird.

Diese Aufgabe wird durch die Merkmale des Patentanspruchs 1 verfahrensmäßig und durch die Merkmale des Patentanspruchs 7 vorrichtungsmäßig gelöst.
Vorteilhafte Weiterbildungen der Erfindung sind die Gegenstände der abhängigen Patentansprüche.

Erfindungsgemäß wird in einer ersten Alternative bei manueller Betätigung eines bestimmten Schalters (Zusatzschalter oder ohnehin vorhandener Multifunktionsschalter) die Brennkraftmaschine mittels eines elektronischen Steuergeräts auf einen Sonderdrehzahlbetrieb eingestellt, bei dem die Sonderdrehzahl unterhalb der üblicherweise vorgegebenen Leerlaufdrehzahl liegt.

In einer zweiten Alternative wird bei Vorliegen einer vorgegebenen Bedingung die Brennkraftmaschine vom Steuergerät automatisch auf einen Sonderdrehzahlbetrieb eingestellt, bei dem die Sonderdrehzahl unterhalb der üblicherweise vorgegebenen Leerlaufdrehzahl liegt. Hierfür vorgegebene Bedingungen können z. B. ff. sein:
- mit dem Steuergerät verbundene Sensoren erkennen, daß die Fahrzeuggeschwindigkeit unterhalb einer vorgegebenen Schwelle liegt und/oder
- mit dem Steuergerät verbundene Sensoren erkennen, daß der 1. Gang oder der Rückwärtsgang vorliegt und/oder
- mit dem Steuergerät verbundene Sensoren erkennen extreme Fahrbahnunebenheiten und/oder
- mit dem Steuergerät verbundene Sensoren erkennen extreme Längsund/oder Querneigungen und/oder
- mit dem Steuergerät verbundene Sensoren erkennen Hängerbetrieb, einen Einparkvorgang oder extremen stop-and-go Betrieb
- usw.

Vorzugsweise wird der Sonderdrehzahlbetrieb nur für eine vorgegebene Zeitdauer eingestellt und wird anschließend automatisch ausgeschaltet. In einer Alternative kann auch nach einer vorgegebenen Zeitdauer eine Empfehlung (akustisch, optisch oder haptisch) zum Ausschalten des Sonderdrehzahlbetriebs an den Fahrer ausgegeben werden. Wird die Zeitdauer überschritten und/oder kommt der Fahrer der Empfehlung für längere Zeit nicht nach, kann der Sonderdrehzahlbetrieb anschließend automatisch ausgeschaltet werden.

In einer Weiterbildung der Erfindung wird der Sonderdrehzahlbetrieb abhängig von drehzahlrelevanten Betriebszuständen ein- und/oder ausgeschaltet.

Die Leerlaufdrehzahl ist üblicherweise derart vorgegeben, daß die Brennkraftmaschine nicht direkt betreffende, aber drehzahlrelevante Betriebszustände, wie z. B. eingeschaltete Klimaanlage, nicht ausreichend geladene Batterie, Akustik usw., optimal eingehalten werden können. Eine Reduzierung der Brennkraftmaschinendrehzahl auf eine extrem niedrige Sonderdrehzahl unterhalb der Leerlaufdrehzahl kann daher nicht für alle Betriebszustände und/oder nur zeitlich limitiert eingestellt werden.

In einer weiteren vorteilhaften Ausgestaltung der Erfindung wird alternativ oder zusätzlich der eingeschaltete Sonderdrehzahlbetrieb bei Getriebeschaltvorgängen, z. B. beim Hochschalten aus dem 1. Gang oder beim Übergang vom Rückwärtsgang in die Neutralstellung, automatisch ausgeschaltet.

In einer weiteren vorteilhaften Ausgestaltung der Erfindung wird der eingeschaltete Sonderdrehzahlbetrieb alternativ oder zusätzlich bei Überschreiten einer vorgegebenen Fahrzeuggeschwindigkeit automatisch ausgeschaltet.

Sämtliche Alternativen können auch miteinander kombiniert werden.

Im übrigen kann vorteilhafterweise ein Ausschalten des Sonderdrehzahlbetriebs auch stets manuell vom Fahrer, z. B. Beispiel durch Betätigung des dafür bestimmten Schalters vorgenommen werden.

Das Umschalten in den oder aus dem Sonderdrehzahlbetrieb muß nicht, wie bei den bekannten Systemen, bei Fahrzeugstillstand, sondern kann während der Fahrt vorgenommen werden.

Durch die Erfindung ist keine zusätzliche Übersetzungsstufe notwendig. Eine extrem niedrige Fahrzeuggeschwindigkeit wird für Sonderfahrsituationen, z. B. in schwierigem Gelände, durch situative Aktivierung mittels gezielter Reduzierung der Brennkraftmaschinendrehzahl erreicht. Hierfür kann das ohnehin vorhandene elektronische Brennkraftmaschinensteuergerät verwendet werden. Moderne, elektronisch geregelte Brennkraftmaschinen können heute zumindest zeitlich limitiert mit extrem niedrigen Drehzahlen stabil, d. h. ohne Ruckeln" und ohne Abwürgen" der Brennkraftmaschine, betrieben werden. Höhere Leerlaufdrehzahlen werden oft durch drehzahlabhängige Größen (Klimaanlage, Batterieladezustand, Akustik) vorgegeben. Für einen zeitlich limitierten Fahrzustand können diese Größen vernachlässigt werden, um die Extremfahrzeuggeschwindigkeiten zu erreichen. Diese Betriebsanpassung kann ohne schleifende Kupplung, also ohne thermische Überlastung von Kupplungs- oder Getriebeteilen, vorgenommen werden.

Die Erfindung ist nicht auf Geländefahrzeuge beschränkt; denn sie kann auch zur Verbesserung der Fahrweise und des Rangierverhaltens, z. B. bei einer extremen Bergfahrt und/oder bei Hängerbetrieb und/oder bei einem schwierigen Einparkvorgang und/oder im stop-and-go Betrieb, eingesetzt werden.

## Patentansprüche

1. Verfahren in Kraftfahrzeugen zur Ermöglichung eines stabilen Fahrbetriebs bei extrem niedriger Fahrzeuggeschwindigkeit mittels eines elektronischen Steuergeräts, **dadurch gekennzeichnet, daß** bei manueller Betätigung eines bestimmten Schalters die Brennkraftmaschine vom Steuergerät auf einen Sonderdrehzahlbetrieb eingestellt wird, bei dem die Sonderdrehzahl unterhalb der üblicherweise vorgegebenen Leerlaufdrehzahl liegt und dass der Sonderdrehzahlbetrieb nur für eine vorgegebene Zeitdauer eingestellt wird und anschließend automatisch wieder ausgeschaltet wird.

2. Verfahren in Kraftfahrzeugen zur Ermöglichung eines stabilen Fahrbetriebs bei extrem niedriger Fahrzeuggeschwindigkeit mittels eines elektronischen Steuergeräts, bei Vorliegen einer vorgegebenen Bedingung die Brennkraftmaschine vom Steueraerät automatisch auf einen Sonderdrehzahlbetrieb eingestellt wird, bei dem die Sonderdrehzahl unterhalb der üblicherweise vorgegebenen Leerlaufdrehzahl liegt, **dadurch gekennzeichnet, daß** der Sonderdrehzahlbetrieb nur für eine vorgegebene Zeitdauer eingestellt wird und anschließend automatisch wieder ausgeschaltet wird.

3. Verfahren nach Patentanspruch 1 oder 2, **dadurch gekennzeichnet, daß** alternativ zum automatischen Ausschalten nach einer vorgegebenen Zeitdauer eine Empfehlung zum Ausschalten des Sonderdrehzahlbetriebs an den Fahrer ausgegeben wird.

4. Verfahren nach einem der Patentansprüche 1 bis 3, **dadurch gekennzeichnet, daß** der Sonderdrehzahlbetrieb auch in Abhängigkeit von drehzahlrelevanten Betriebszuständen ein- und/oder ausgeschaltet werden kann.

5. Verfahren nach einem der Patentansprüche 1 bis 4, **dadurch gekennzeichnet, daß** der eingeschaltete Sonderdrehzahlbetrieb auch bei Getriebeschaltvorgängen automatisch ausgeschaltet wird.

6. Verfahren nach einem der Patentansprüche 1 bis 5, **dadurch gekennzeichnet, daß** der eingeschaltete Sonderdrehzahlbetrieb bei Überschreiten einer vorgegebenen Fahrzeuggeschwindigkeit automatisch ausgeschaltet wird.

7. Vorrichtung in Kraftfahrzeugen zur Ermöglichung eines stabilen Fahrbetriebs bei extrem niedriger Fahrzeuggeschwindigkeit mit einem elektronischen Steuergerät, **dadurch gekennzeichnet, daß** Mittel vorgesehen sind, durch die bei manueller Betätigung eines bestimmten Schalters die Brennkraftmaschine vom Steuergerät auf einen Sonderdrehzahlbetrieb eingestellt wird, wobei die Sonderdrehzahl unterhalb der üblicherweise vorgegebenen Leerlaufdrehzahl liegt und dass Mittel vorgesehen sind, durch die der Sonderdrehzahlbetrieb nur für eine vorgegebene Zeitdauer eingestellt wird und anschließend automatisch wieder ausgeschaltet wird.

8. Vorrichtung in Kraftfahrzeugen zur Ermöglichung eines stabilen Fahrbetriebs bei extrem niedriger Fahrzeuggeschwindigkeit mit einem elektronischen Steuergerät, wobei Mittel vorgesehen sind, durch die bei Vorliegen einer vorgegebenen Bedingung die Brennkraftmaschine vom Steuergerät automatisch auf einen Sonderdrehzahlbetrieb eingestellt wird, wobei die Sonderdrehzahl unterhalb der üblicherweise vorgegebenen Leerlaufdrehzahl liegt, **dadurch gekennzeichnet, daß** Mittel vorgesehen sind, durch die der Sonderdrehzahlbetrieb nur für eine vorgegebene Zeitdauer eingestellt wird und anschließend automatisch wieder ausgeschaltet wird.

9. Vorrichtung nach Patentanspruch 7 oder 8, **dadurch gekennzeichnet, daß** Mittel vorgesehen sind, durch die alternativ zum automatischen Ausschalten nach einer vorgegebenen Zeitdauer eine Empfehlung zum Ausschalten des Sonderdrehzahlbetriebs an den Fahrer ausgegeben wird.

10. Vorrichtung nach einem der Patentansprüche 7 bis 9, **dadurch gekennzeichnet, daß** Mittel vorgesehen sind, durch die der Sonderdrehzahlbetrieb auch in Abhängigkeit von drehzahlrelevanten Betriebszuständen ein- und/oder ausgeschaltet werden kann.

11. Vorrichtung nach einem der Patentansprüche 7 bis 10, **dadurch gekennzeichnet, daß** Mittel vorgesehen sind, durch die der eingeschaltete Sonderdrehzahlbetrieb auch bei Getriebeschaltvorgängen automatisch ausgeschaltet wird.

12. Vorrichtung nach einem der Patentansprüche 7 bis 11, **dadurch gekennzeichnet, daß** Mittel vorgesehen sind, durch die der eingeschaltete Sonderdrehzahlbetrieb bei Überschreiten einer vorgegebenen Fahrzeuggeschwindigkeit automatisch ausgeschaltet wird.

## Claims

1. A method for permitting stable driving operation of motor vehicles at extremely low vehicle speed by means of an electronic control apparatus, **characterised in that** on manual operation of a specific switch, the internal-combustion engine is adjusted by the control apparatus to a special rotational speed operation, in which the special rotational speed is below the generally preset idling rotational speed and **in that** the special rotational speed operation is only adjusted for a preset time period and is then automatically switched off again.

2. A method for permitting stable driving operation of motor vehicles at extremely low vehicle speed by means of an electronic control apparatus, wherein when a preset condition is present, the internal-combustion engine is automatically adjusted by the control apparatus to a special rotational speed operation, in which the special rotational speed is below the generally preset idling rotational speed, **characterised in that** the special rotational speed operation is only adjusted for a preset time period and is then automatically switched off again.

3. A method according to claim 1 or 2, **characterised in that,** as an alternative to automatically switching off, after a preset time period, a recommendation is emitted to the driver to switch off the special rotational speed operation.

4. A method according to any one of claims 1 to 3, **characterised in that** the special rotational speed operation can also be switched on or off as a function of rotational speed-relevant operating states.

5. A method according to any one of claims 1 to 4, **characterised in that** the switched-on special rotational speed operation is also automatically switched off during gear changing processes.

6. A method according to any one of claims 1 to 5, **characterised in that** the switched-on special rotational speed operation is automatically switched off when a preset vehicle speed is exceeded.

7. A device for permitting stable driving operation of motor vehicles at extremely low vehicle speed with an electronic control apparatus, **characterised in that** means are provided by which the internal-combustion engine is adjusted by the control apparatus to a special rotational speed operation on manual operation of a specific switch, wherein the special rotational speed is below the generally preset idling rotational speed and **in that** means are provided by which the special rotational speed operation is only adjusted for a preset time period and is then automatically switched off again.

8. A device for permitting stable driving operation of motor vehicles at extremely low vehicle speed with an electronic control apparatus, wherein means are provided, by means of which the internal-combustion engine is automatically adjusted by the control apparatus to a special rotational speed operation when a preset condition is present, wherein the special rotational speed is below the generally preset idling rotational speed, **characterised in that** means are provided by which the special rotational speed operation is only adjusted for a preset time period and is then automatically switched off again.

9. A device according to claim 7 or 8, **characterised in that** means are provided by which, as an alternative to automatic switching off, after a preset time period, a recommendation is emitted to the driver to switch off the special rotational speed operation.

10. A device according to any one of claims 7 to 9, **characterised in that** means are provided by which the special rotational speed operation can also be switched on or off as a function of rotational speed-relevant operating states.

11. A device according to any one of claims 7 to 10, **characterised in that** means are provided by which the switched-on special rotational speed operation is also automatically switched off during gear changing processes.

12. A device according to any one of claims 7 to 11, **characterised in that** means are provided by which the switched-on special rotational speed operation is automatically switched off when a preset vehicle speed is exceeded.

## Revendications

1. Procédé qui fait appel à un appareil de commande électronique destiné à des véhicules automobiles pour permettre une conduite stable lorsque la vitesse du véhicule est extrêmement faible,
**caractérisé en ce que**
lorsqu'on manoeuvre à la main un commutateur déterminé, le moteur à combustion interne passe sous l'effet de l'appareil de commande dans un fonctionnement en régime spécial, le régime spécial étant inférieur à la vitesse nominale du moteur habituellement prédéterminée et le fonctionnement en régime spécial n'étant mis en marche que pour une durée prédéterminée et est ensuite de nouveau coupé automatiquement.

2. Procédé qui fait appel à un appareil de commande électronique destiné à des véhicules automobiles pour permettre une conduite stable lorsque la vitesse du véhicule est extrêmement faible, selon lequel lorsqu'il existe une condition prédéterminée le moteur à combustion interne est automatiquement réglé par l'appareil de commande dans un fonctionnement en régime spécial, le régime spécial étant inférieur à la vitesse nominale du moteur habituellement prédéterminée,
**caractérisé en ce que**
le fonctionnement en régime spécial n'est mis en marche que pour une durée prédéterminée et est ensuite de nouveau coupé automatiquement.

3. Procédé selon la revendication 1 ou 2,
**caractérisé en ce qu'**
une autre solution à la déconnexion automatique consiste à donner une consigne au conducteur après une durée prédéterminée pour qu'il déconnecte le fonctionnement en régime spécial.

4. Procédé selon l'une des revendications 1 à 3,
**caractérisé en ce que**
le fonctionnement en régime spécial peut aussi être mis en marche et/ ou coupé en fonction d'états de fonctionnement liés au régime.

5. Procédé selon l'une des revendications 1 à 4,
**caractérisé en ce que**
le fonctionnement en régime spécial en marche peut aussi être coupé automatiquement lorsqu'on passe des vitesses.

6. Procédé selon l'une des revendications 1 à 5,
**caractérisé en ce que**
le fonctionnement en régime spécial en marche est automatiquement coupé lorsqu'une vitesse prédéterminée du véhicule est dépassée.

7. Dispositif qui fait appel à un appareil de commande électronique destiné à des véhicules automobiles pour permettre une conduite stable lorsque la vitesse du véhicule est extrêmement faible,
**caractérisé en ce qu'**
on prévoit des moyens grâce auxquels le moteur à combustion interne est réglé par l'appareil de commande dans un fonctionnement en régime spécial lorsqu'on manoeuvre à la main un commutateur déterminé, le régime spécial étant inférieur au régime de ralenti habituellement prédéterminé et l'on prévoit des moyens grâce auxquels le fonctionnement en régime spécial n'est mis en marche que pour une durée prédéterminée et est ensuite de nouveau coupé automatiquement.

8. Dispositif qui fait appel à un appareil de commande électronique destiné à des véhicules automobiles pour permettre une conduite stable lorsque la vitesse du véhicule est extrêmement faible, dans lequel on prévoit des moyens grâce auxquels le moteur à combustion interne est automatiquement réglé par l'appareil de commande dans un fonctionnement en régime spécial lorsqu'une condition prédéterminée est remplie, le régime spécial étant inférieur au régime de ralenti habituellement prédéterminé,
**caractérisé en ce qu'**
on prévoit des moyens grâce auxquels le fonctionnement en régime spécial n'est mis en marche que pour une durée prédéterminée et est ensuite de nouveau coupé automatiquement.

9. Dispositif selon la revendication 7 ou 8,
**caractérisé en ce qu'**
on prévoit des moyens grâce auxquels, au lieu d'une déconnexion automatique après une durée prédéterminée, on adresse une consigne au conducteur pour qu'il déconnecte le fonctionnement en régime spécial.

10. Dispositif selon l'une des revendications 7 à 9,
**caractérisé en ce qu'**
on prévoit des moyens grâce auxquels le fonctionnement en régime spécial peut aussi être mis en marche ou coupé en fonction d'états de fonctionnement liés au régime.

11. Dispositif selon l'une des revendications 7 à 10,
**caractérisé en ce qu'**
on prévoit des moyens grâce auxquels le fonctionnement en régime spécial en marche est aussi déconnecté automatiquement lorsqu'on passe des vitesses.

12. Dispositif selon l'une des revendications 7 à 11,
**caractérisé en ce qu'**
on prévoit des moyens grâce auxquels le fonctionnement en régime spécial en marche est aussi déconnecté automatiquement lorsqu'on dépasse une vitesse prédéterminée du véhicule.
